# EUROPÄISCHE PATENTSCHRIFT

(11) **EP 3 911 907 B1**
(45) Veröffentlichungstag und Bekanntmachung des Hinweises auf die Patenterteilung: **09.08.2023**
(21) Anmeldenummer: 20700588.5
(22) Anmeldetag: 13.01.2020
(51) Int. Cl.: F28D 21/00, F28D 1/02, F24D 17/00, F28F 27/00

(54) **VORRICHTUNG UND VERFAHREN ZUR WÄRMERÜCKGEWINNUNG AUS EINEM FLÜSSIGEN MEDIUM**
APPARATUS AND METHOD FOR HEAT RECOVERY FROM A LIQUID MEDIUM
DISPOSITIF ET PROCÉDÉ POUR LA RÉCUPÉRATION DE CHALEUR D'UN MILIEU LIQUIDE

(30) Priorität: 14.01.2019 DE 102019200324
(43) Veröffentlichungstag der Anmeldung: 24.11.2021
(73) Patentinhaber: Revincus GmbH, 07745 Jena (DE)
(72) Erfinder: DRECHSEL, Felix Konstantin, 99423 Weimar (DE); POLSTER, Jeremias, 99423 Weimar (DE)
(74) Vertreter: Liedtke & Partner Patentanwälte
(86) Internationale Anmeldenummer: PCT/EP2020/050685
(87) Internationale Veröffentlichungsnummer: WO 2020/148230

(56) Entgegenhaltungen:
- DE-A1-102012 211 921
- DE-U1- 9 002 016
- FR-A1- 2 405 443

## Beschreibung

Die Erfindung betrifft eine Vorrichtung und ein Verfahren zur Wärmerückgewinnung aus einem flüssigen Medium.

In Gebäuden und Industrieanlagen fallen große Mengen verschmutzten Abwassers mit mehr oder weniger hohem Temperaturniveau an. Die darin befindliche Wärme bleibt im Gebäude meist ungenutzt.

Aus der EP 0 174 554 B1 ist ein Wärmeaustauscher zum Übertragen von Wärme aus verschmutztem Abwasser bekannt, mit einem zur Aufnahme des Abwassers dienenden Behälter, der einen über ein Filter führenden Eingang, einen Ausgang und vorzugsweise einen wahlweise zu öffnenden Schlamm-Auslaß aufweist, und einer Anzahl von in dem Behälter angeordneten Austauschelementen, die von einem Wärmeträger, insbesondere Nutzwasser oder einem Wärmeträgermedium einer Wärmepumpe oder Kälteanlage, durchströmbar sind, wobei die Austauschelemente aufrechtstehende Austauscherplatten sind und im unteren Bereich des Behälters eine zum Beaufschlagen der Plattenoberflächen mit einem Spülgas, vorzugsweise Luft, ausgebildete und angeordnete Einblaseinrichtung vorgesehen ist.

FR 2 405 443 A1, die als der nächstliegende Stand der Technik angesehen werden kann, beschreibt ein Verfahren zur Regelung einer Solarheizungsanlage, wobei durch Sonneneinstrahlung erzeugte Kalorien in einem Speicher mit Hilfe einer Wärmeübertragungsflüssigkeit gespeichert werden, die zwischen mindestens einem Solarkollektor und dem Speicher in einem geschlossenen Kreislauf umgewälzt werden kann, wobei in dem Speicher mindestens drei Speicheretagen der Wärmeübertragungsflüssigkeit bei unterschiedlichen Durchschnittstemperaturen definiert sind, nämlich eine relativ niedrige Temperatur in einer ersten Etage, eine mittlere Temperatur in einer zweiten Etage und eine relativ hohe Temperatur in einer dritten Etage. Zu einem bestimmten Zeitpunkt werden die Etage oder Etagen gewählt, die von der Wärmeübertragungsflüssigkeit durchflossen werden und in der oder denen die Kalorien gespeichert werden, indem ständig die Temperatur in dem Solarkollektor und die ersten, zweiten und dritten, jeweils zunehmenden Soll-Temperaturen der ersten, zweiten und dritte Etage verglichen wird. Man lässt die Flüssigkeit durch die erste Etage bei niedriger Temperatur zirkulieren, wenn die Temperatur im Solarkollektor zwischen der ersten und der zweiten Soll-Temperatur liegt. Man lässt die Wärmeübertragungsflüssigkeit durch die erste und die zweite Etage nacheinander zirkulieren, wenn die Temperatur im Solarkollektor zwischen der zweiten und der dritten Soll-Temperatur liegt. Wenn die Temperatur im Solarkollektor die dritte Soll-Temperatur überschreitet, lässt man die Wärmeübertragungsflüssigkeit durch alle drei Stufen nacheinander zirkulieren.

Der Erfindung liegt die Aufgabe zu Grunde, eine verbesserte Vorrichtung und ein verbessertes Verfahren zur Wärmerückgewinnung aus einem flüssigen Medium anzugeben.

Die Aufgabe wird erfindungsgemäß gelöst durch eine Vorrichtung mit den Merkmalen des Anspruchs 1 und durch ein Verfahren mit den Merkmalen des Anspruchs 12.

Vorteilhafte Ausgestaltungen der Erfindung sind Gegenstand der Unteransprüche.

Eine erfindungsgemäße Vorrichtung zur Wärmerückgewinnung aus einem flüssigen Medium, beispielsweise Grauwasser, umfasst:
- einen Wärmetauscher mit mindestens zwei voneinander zumindest teilweise thermisch getrennten Wärmetauscherzellen zur Aufnahme des flüssigen Mediums, wobei jede der Wärmetauscherzellen einen Temperatursensor zur Ermittlung einer Temperatur des darin befindlichen flüssigen Mediums aufweist,
- mindestens eine Rohrleitung zum Führen von Trinkwasser und/oder Heizungswasser, die zumindest eine der Wärmetauscherzellen durchläuft,
- eine Zuleitung, in der das flüssige Medium geführt ist,
- eine Verteilervorrichtung, mittels derer das flüssige Medium den Wärmetauscherzellen aus der Zuleitung selektiv zuführbar ist,
- mindestens einen Temperatursensor zum Messen einer Temperatur des flüssigen Mediums in der Zuleitung,
wobei die Verteilervorrichtung so steuerbar und/oder regelbar ist, dass das flüssige Medium aus der Zuleitung derjenigen Wärmetauscherzelle zugeleitet wird, deren aktuelle Temperatur am wenigsten kälter ist als die des flüssigen Mediums in der Zuleitung.

In einer Ausführungsform ist jede der Wärmetauscherzellen zu einer oder jeder benachbarten der Wärmetauscherzellen über Zellenverbinder und/oder über eine den Fluss des flüssigen Mediums hemmende Struktur verbunden, um das flüssige Medium einer der benachbarten Wärmetauscherzellen zuzuleiten.

Jede der Wärmetauscherzellen kann einen Schwimmer zur Bestimmung eines Flüssigkeitsstands aufweisen, beispielsweise um bei Zuführung des flüssigen Mediums in eine der Wärmetauscherzellen die weitere steuerbare Klappe zu einer der benachbarten Wärmetauscherzellen oder in ein Abwassersystem zu öffnen.

In einer Ausführungsform sind die Wärmetauscherzellen übereinander angeordnet, insbesondere so, dass die Temperatur des flüssigen Mediums im Wärmetauscher von oben nach unten abnimmt. Diese Schichtung kann sich durch Schwerkraft einstellen. Insbesondere ist keine Fördereinrichtung, beispielsweise eine Pumpe, für das flüssige Medium erforderlich.

In einer Ausführungsform ist die Rohrleitung zumindest innerhalb der durchlaufenen Wärmetauscherzellen als eine Rohrspirale ausgebildet. Es können mehrere Rohrleitungen, insbesondere in Form von jeweiligen Rohrspiralen, vorgesehen sein, beispielsweise zwei, drei oder mehr Rohrspiralen.

In einer Ausführungsform weist die Rohrleitung stromabwärts vom Wärmetauscher ein elektronisch steuerbares und/oder regelbares Verschlussventil auf, mittels dessen eine Fließgeschwindigkeit regelbar ist. Beispielsweise kann die Rohrleitung so auch verschlossen und der Durchfluss gestoppt werden.

In einer Ausführungsform ist stromaufwärts von dem Verschlussventil, insbesondere stromabwärts vom Wärmetauscher, in der Rohrleitung ein Druckmesser vorgesehen, mittels dessen ein Druckabfall detektierbar ist. Ein Druckabfall bei geschlossenem Verschlussventil indiziert ein Leck der Rohrleitung.

In einer Ausführungsform ist ein Bypass für das flüssige Medium vorgesehen, wobei das flüssige Medium durch den Bypass am Wärmetauscher vorbei in ein Abwassersystem leitbar ist, wenn die Temperatur des flüssigen Mediums in der Zuleitung niedriger ist als jede der aktuell bestehenden Temperaturen des flüssigen Mediums in den Wärmetauscherzellen.

In einer Ausführungsform ist ein Grobfilter zur Filterung des flüssigen Mediums vor Eintritt in den Wärmetauscher vorgesehen. Auf diese Weise können Verschmutzungen aus dem flüssigen Medium, beispielsweise Grauwasser, entfernt werden. Das Grobfilter kann nach einem zum Wärmetauscher führenden Abzweig angeordnet sein, so dass das durch den Bypass fließende flüssige Medium nicht durch das Grobfilter fließt.

In einer Ausführungsform ist ein Steuerteil zur Steuerung und/oder Regelung der Klappen und zur Erfassung der Temperaturen von den Temperatursensoren vorgesehen. Das Steuerteil kann auch den Flüssigkeitsstand in den Wärmetauscherzellen über die jeweiligen Schwimmer erfassen. Wenn der Flüssigkeitsstand in einer der Wärmetauscherzellen trotz geschlossener Klappen ansteigt so kann auf ein Leck in der Rohrleitung geschlossen werden.

In einer Ausführungsform sind die Rohrleitungen aus Abschnitten gebildet, die nach Durchlaufen einer der Wärmetauscherzellen an deren Oberseite enden und mit einem abnehmbaren Deckel der jeweiligen Wärmetauscherzelle verbunden sind.

In einer Ausführungsform weisen die Enden der Abschnitte der Rohrleitungen sowie die Zellenverbinder Gewinde auf.

In einer Ausführungsform sind der Wärmetauscher und/oder die Rohrleitung aus Kunststoff gebildet oder weisen Kunststoffoberflächen für den Kontakt mit dem flüssigen Medium auf. Der Wärmetauscher und/oder die Rohrleitung können auch Metall, beispielsweise Edelstahl umfassen. Insbesondere die Rohrleitung kann beispielsweise aus Metall, insbesondere Edelstahl, gebildet sein und auf einer Außenseite und/oder einer Innenseite mit Kunststoff beschichtet sein.

In einer Ausführungsform umfasst die Verteilervorrichtung eine Anzahl von steuerbaren Klappen. In einer weiteren Ausführungsform umfasst die Verteilervorrichtung Folgendes:
- ein äußeres Rohr, an dem Abzweige zu den einzelnen Wärmetauscherzellen vorgesehen sind,
- ein in dem äußeren Rohr mittels eines Antriebs rotierbar angeordnetes inneres Rohr, wobei ein Außendurchmesser des inneren Rohres zumindest annähernd einem Innendurchmesser des äußeren Rohres entspricht, wobei das innere Rohr zu jedem Abzweig auf gleicher Höhe in Längsrichtung eine jeweilige Öffnung aufweist, die durch Rotieren des inneren Rohres in eine Winkelposition stellbar ist, in der sie mit dem jeweiligen Abzweig fluchtet, derart, dass in jeder Drehposition des inneren Rohres jeweils höchstens eine der Öffnungen mit dem zugeordneten Abzweig fluchtet.

In einer Ausführungsform umfasst der Zellenverbinder jeweils eine weitere steuerbare Klappe und/oder einen Syphon, der das flüssige Medium an einem Auslauf, insbesondere an einem Grund der jeweils oberen der miteinander verbundenen Wärmetauscherzellen, aufnimmt, dann mindestens bis zur Höhe einer Oberkante der jeweils oberen der miteinander verbundenen Wärmetauscherzellen und schließlich in die jeweils untere der miteinander verbundenen Wärmetauscherzellen führt.

In einer Ausführungsform ist an einem Hochpunkt des Syphons ein Belüftungsventil vorgesehen.

In einer Ausführungsform ist der Syphon bis zur Höhe einer Oberkante der obersten der Wärmetauscherzellen geführt.

Erfindungsgemäß ist eine weitere Rohrleitung als Rücklauf einer Heizungsanlage vorgesehen, die die Wärmetauscherzellen von unten nach oben durchläuft, wobei zwischen den Wärmetauscherzellen und oberhalb der obersten Wärmetauscherzelle die Rohrleitung über Verbindungsrohre jeweils zu einer Vorlaufleitung verbunden ist, wobei in den Verbindungsrohren steuerbare Klappen vorgesehen sind, mittels deren in der Vorlaufleitung eine vorgegebene Vorlauftemperatur einstellbar ist.

Bei einem erfindungsgemäßen Verfahren zum Betrieb der Vorrichtung werden die Klappen so gesteuert und/oder geregelt, dass das flüssige Medium aus der Zuleitung derjenigen Wärmetauscherzelle zugeleitet wird, deren aktuelle Temperatur am wenigsten kälter ist als die des Grauwassers in der Zuleitung.

Erfindungsgemäß ist eine weitere Rohrleitung als Rücklauf einer Heizungsanlage vorgesehen, die die Wärmetauscherzellen von unten nach oben durchläuft, wobei zwischen den Wärmetauscherzellen und oberhalb der obersten Wärmetauscherzelle die Rohrleitung über Verbindungsrohre jeweils zu einer Vorlaufleitung verbunden ist, wobei in den Verbindungsrohren steuerbare Klappen vorgesehen sind, mittels deren in der Vorlaufleitung eine vorgegebene Vorlauftemperatur eingestellt wird.

In einer Ausführungsform sind die Wärmetauscherzellen übereinander angeordnet, wobei das kälteste flüssige Medium in der untersten Wärmetauscherzelle und das heißeste flüssige Medium in der obersten Wärmetauscherzelle gespeichert wird.

In einer Ausführungsform ist jede der Wärmetauscherzellen zu einer oder jeder benachbarten der Wärmetauscherzellen über Zellenverbinder mit jeweils einer weiteren steuerbaren Klappe verbunden, um das flüssige Medium einer der benachbarten Wärmetauscherzellen zuzuleiten, wobei, falls eine zu befüllende Wärmetauscherzelle bereits mit flüssigem Medium gefüllt ist, um den erforderlichen Platz zu schaffen, deren weitere Klappe im Zellverbinder zunächst geöffnet wird, um das vorhandene flüssige Medium in die darunterliegende Wärmetauscherzelle oder in ein Abwassersystem zu leiten.

In einer Ausführungsform wird als flüssiges Medium Grauwasser verwendet.

In einer Ausführungsform wird das Trinkwasser und/oder Heizungswasser durch die Rohrleitung von unten nach oben durch den Wärmetauscher geleitet.

Ausführungsbeispiele der Erfindung werden im Folgenden anhand der Zeichnungen näher erläutert.

Darin zeigen:
- Figur 1: eine schematische Ansicht einer beispielhaften Ausführungsform einer Vorrichtung zur Wärmerückgewinnung aus Grauwasser,
- Figur 2: eine weitere schematische Ansicht der Vorrichtung zur Wärmerückgewinnung aus Grauwasser,
- Figur 3: eine schematische Detailansicht einer Ausführungsform der Vorrichtung zur Wärmerückgewinnung,
- Figur 4: eine schematische Ansicht einer beispielhaften Ausführungsform der Vorrichtung mit Wärmetauscherzellen, wobei Zellenverbinder einander benachbarter Wärmetauscherzellen einen jeweiligen Syphon umfassen,
- Figur 5: eine schematische Ansicht einer weiteren beispielhaften Ausführungsform der Vorrichtung mit Wärmetauscherzellen, wobei Zellenverbinder einander benachbarter Wärmetauscherzellen einen jeweiligen Syphon umfassen,
- Figur 6: eine schematische Ansicht einer beispielhaften Ausführungsform der Vorrichtung mit Wärmetauscherzellen, die übereinander angeordnet sind, wobei zwischen einander benachbarten Wärmetauscherzellen jeweils eine den Fluss des Grauwassers hemmende Struktur vorgesehen ist,
- Figur 7: eine schematische Ansicht der hemmenden Struktur, und
- Figur 8: eine alternative Verteilervorrichtung für das Grauwasser.

Einander entsprechende Teile sind in allen Figuren mit den gleichen Bezugszeichen versehen.

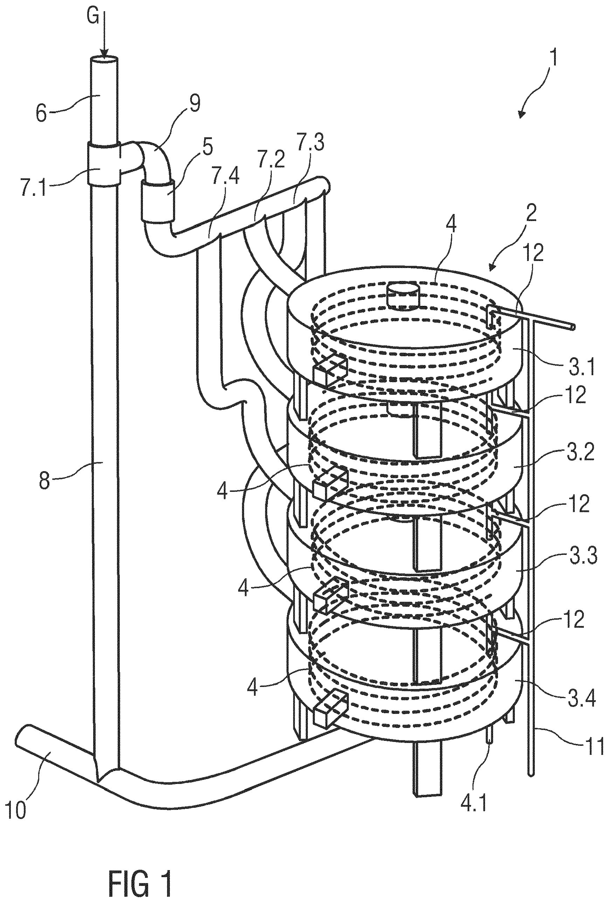

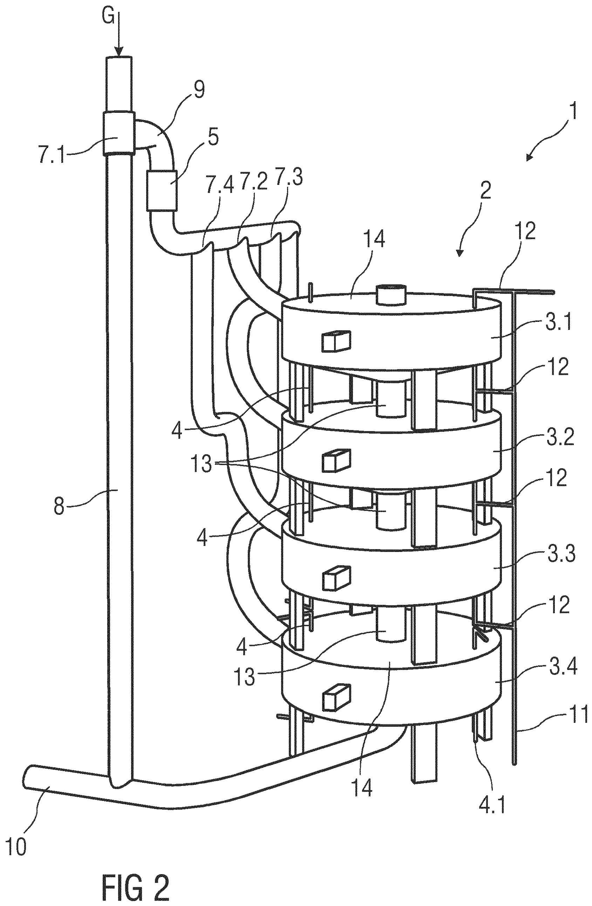

Figuren 1 und 2 zeigen schematische Ansichten einer beispielhaften Ausführungsform einer Vorrichtung 1 zur Wärmerückgewinnung aus Grauwasser.

Die Vorrichtung 1 eignet sich zur Erwärmung von Trinkwasser und optional einer Warmwasserheizung, insbesondere einer Niedrigtemperaturheizung, durch die Nutzung von Grauwasser in einem Wärmetauscher 2. Der Wärmetauscher 2 umfasst mehrere thermisch voneinander getrennte Wärmezonen, das heißt mehrere miteinander verbundene Wärmetauscherzellen 3.1, 3.2, 3.3, 3.4 in Form von Tanks. Im vorliegenden Ausführungsbeispiel sind vier Wärmetauscherzellen 3.1, 3.2, 3.3, 3.4 vorgesehen. Die Wärmetauscherzellen 3.1, 3.2, 3.3, 3.4 werden von mindestens einer Rohrleitung 4, insbesondere einer Rohrspirale 4, beispielweise mindestens zwei Rohrspiralen 4, 4.1 oder einer Doppelspirale, durchlaufen. Die Rohrleitung 4 führt Trinkwasser oder Heizwasser einer Warmwasserheizung oder Niedertemperaturheizung. Im Falle von zwei Rohrspiralen 4, 4.1 führt eine der Rohrspiralen 4 Trinkwasser und die andere Heizwasser. Die Rohrspiralen 4, 4.1 durchlaufen eine oder mehrere der Wärmetauscherzellen 3.1, 3.2, 3.3, 3.4, beispielsweise auch alle Wärmetauscherzellen 3.1, 3.2, 3.3, 3.4. Die Vorrichtung 1 ist mit einer Grauwasserzuleitung 6 verbunden, die in einem Gebäude oder einer Anlage anfallendes Grauwasser G führt. Ein erster Abzweig 7.1 umfasst einen Temperatursensor zur Ermittlung einer Temperatur des Grauwassers und eine steuerbare Klappe 15.1, mit der das Grauwasser entweder bei Überschreiten oder Erreichen einer vorgegebenen ersten Temperatur einem Grauwassersammler 9 der Vorrichtung 1 zugeleitet oder bei Unterschreiten der vorgegebenen ersten Temperatur durch einen Bypass 8 an der Vorrichtung 1 vorbeigeleitet wird.

Im Grauwassersammler 9 passiert das Grauwasser G zunächst einen Grobfilter 5, in dem es gereinigt wird. Stromabwärts vom Grobfilter 5 weist der Grauwassersammler eine Anzahl von Abzweigen 7.2 bis 7.4, beispielsweise einen zweiten Abzweig 7.2, einen dritten Abzweig 7.3 und einen vierten Abzweig 7.4 auf. Der zweite Abzweig 7.2 umfasst einen Temperatursensor zur Ermittlung einer Temperatur des Grauwassers G und eine steuerbare Klappe 15.2, mit der das Grauwasser G bei Überschreiten oder Erreichen einer vorgegebenen zweiten Temperatur der Wärmetauscherzelle 3.1 zugeleitet, insbesondere ausschließlich zugeleitet wird. In einer Ausführungsform wird bei Unterschreiten der vorgegebenen zweiten Temperatur der Wärmetauscherzelle 3.1 kein Grauwasser G zugeleitet. Der dritte Abzweig 7.3 umfasst einen Temperatursensor zur Ermittlung einer Temperatur des Grauwassers G und eine steuerbare Klappe 15.3, mit der das Grauwasser G bei Überschreiten oder Erreichen einer vorgegebenen dritten Temperatur der Wärmetauscherzelle 3.2 zugeleitet, insbesondere ausschließlich zugeleitet wird. In einer Ausführungsform wird bei Unterschreiten der vorgegebenen dritten Temperatur der Wärmetauscherzelle 3.2 kein Grauwasser G zugeleitet. Der vierte Abzweig 7.4 umfasst einen Temperatursensor zur Ermittlung einer Temperatur des Grauwassers G und eine steuerbare Klappe 15.4, mit der das Grauwasser G bei Überschreiten oder Erreichen einer vorgegebenen vierten Temperatur der Wärmetauscherzelle 3.3 zugeleitet, insbesondere ausschließlich zugeleitet wird. In einer Ausführungsform wird bei Unterschreiten der vorgegebenen vierten Temperatur der Wärmetauscherzelle 3.3 kein Grauwasser G zugeleitet. Wenn die Klappen 15.2, 15.3, 15.4 des zweiten bis vierten Abzweigs 7.2, 7.3, 7.4 geschlossen sind, kann das Grauwasser G der Wärmetauscherzelle 3.4 zugeleitet werden. In der Zuleitung zur Wärmetauscherzelle 3.4 kann eine weitere steuerbare Klappe 15.5 vorgesehen sein, mit der das Grauwasser G bei Überschreiten oder Erreichen einer vorgegebenen fünften Temperatur der Wärmetauscherzelle 3.3 zugeleitet, insbesondere ausschließlich zugeleitet wird und die ansonsten geschlossen ist. Insbesondere können die Klappen 15.2, 15.3, 15.4, 15.5 des zweiten bis vierten Abzweigs 7.2, 7.3, 7.4 und im Zulauf zur Wärmetauscherzelle 3.4 so gesteuert sein dass keine oder nur je eine der Klappen 15.2, 15.3, 15.4, 15.5 geöffnet ist. In einer Ausführungsform ist die zweite vorgegebene Temperatur höher als die dritte vorgegebene Temperatur und diese höher als die vierte vorgegebene Temperatur. Die Wärmetauscherzellen 3.1 bis 3.4 können insbesondere übereinander so angeordnet sein, dass durch dieses Verhältnis die Temperatur des Grauwassers G im Wärmetauscher 2 von oben nach unten abnimmt.

Anstatt eines jeweiligen Temperatursensors je Abzweig 7.2, 7.3, 7.4 kann auch lediglich ein Temperatursensor im Grauwassersammler 9 vorgesehen sein, anhand dessen die Klappen 15.2, 15.3, 15.4, 15.5 der Abzweige 7.2, 7.3, 7.4 und im Zulauf zur Wärmetauscherzelle 3.4 gesteuert werden. Ebenso kann auch lediglich ein Temperatursensor im ersten Abzweig 7.1 oder stromaufwärts davor vorgesehen sein anhand dessen die Klappen 15.2, 15.3, 15.4, 15.5 der Abzweige 7.1, 7.2, 7.3, 7.4 und im Zulauf zur Wärmetauscherzelle 3.4 gesteuert werden. In einer Ausführungsform sind die Klappen 15.2, 15.3, 15.4, 15.5 elektronisch gesteuert, beispielsweise mittels eines nicht dargestellten Steuerteils. Ein Steuerteil kann so ausgebildet sein, dass die Temperatur des im Grauwassersammler 9 anfallenden Grauwassers G mit den Temperaturen in den Wärmetauscherzellen 3.1 bis 3.4 verglichen wird und das Grauwasser G aus dem Grauwassersammler 9 derjenigen Wärmetauscherzelle 3.1 bis 3.4 zugeleitet wird, deren aktuelle Temperatur am wenigsten kälter ist als die des Grauwassers G im Grauwassersammler 9. Hierzu kann jede der Wärmetauscherzellen 3.1 bis 3.4 mit einem Temperatursensor ausgerüstet sein.

Jede der Wärmetauscherzellen 3.1, 3.2, 3.3, 3.4 kann zu einer oder jeder benachbarten der Wärmetauscherzellen 3.1, 3.2, 3.3, 3.4 über Zellenverbinder 13 mit jeweils einer weiteren steuerbaren Klappe verbunden sein. Insbesondere wird das kälteste Grauwasser G in der untersten Wärmetauscherzelle 3.4 und das heißeste Grauwasser G in der obersten Wärmetauscherzelle 3.1 gespeichert. Jede der Wärmetauscherzellen 3.1, 3.2, 3.3, 3.4 kann ein Gefälle in Richtung des Zellenverbinders 13 zur jeweils darunterliegenden Wärmetauscherzelle 3.1, 3.2, 3.3, 3.4 oder zum Abwassersystem 10 aufweisen.

Jede der Wärmetauscherzellen 3.1, 3.2, 3.3, 3.4 kann einen Schwimmer zur Bestimmung eines Flüssigkeitsstands aufweisen, beispielsweise um bei Zuführung des flüssigen Mediums G in eine der Wärmetauscherzellen 3.1, 3.2, 3.3, 3.4 die weitere steuerbare Klappe zu einer der benachbarten Wärmetauscherzellen 3.1, 3.2, 3.3, 3.4 oder in ein Abwassersystem 10 zu öffnen. Das Steuerteil kann auch den Flüssigkeitsstand in den Wärmetauscherzellen 3.1, 3.2, 3.3, 3.4 über die jeweiligen Schwimmer erfassen. Wenn der Flüssigkeitsstand in einer der Wärmetauscherzellen 3.1, 3.2, 3.3, 3.4 trotz geschlossener Klappen 15.2, 15.3, 15.4, 15.5 ansteigt so kann auf ein Leck in der Rohrleitung 4, 4.1 geschlossen werden.

Es können mehrere Rohrleitungen, insbesondere in Form von jeweiligen Rohrspiralen 4, 4.1, vorgesehen sein, beispielsweise zwei, drei oder mehr Rohrspiralen. Das Trinkwasser und/oder Heizwasser wird durch die Rohrspirale 4 beispielsweise von unten nach oben geleitet.

Durch ein elektronisch steuerbares Verschlussventil in der Trinkwasserleitung und/oder Heizwasserleitung kann nach dem Durchlaufen des gesamten Wärmetauschers 2 oder eines Teils davon eine Fließgeschwindigkeit geregelt und der Durchfluss gestoppt werden. Das vorgewärmte Trinkwasser kann danach in einen Pufferspeicher (nicht dargestellt) eingespeist werden, welcher durch ein oder mehrere Heizvorrichtungen auf eine gewünschte Endtemperatur aufgeheizt werden kann.

In einer Ausführungsform kann in der untersten Wärmetauscherzelle 3.4 eine Rohrspirale 4.2 für eine Wärmepumpe genutzt werden, welche die Energie des Wassers weitgehend oder vollständig entzieht und optional den Pufferspeicher damit beheizt.

Ziel der Vorrichtung 1 ist die Wärmerückgewinnung aus anfallendem Grauwasser G zur Erwärmung von Trinkwasser und gegebenenfalls von Heizwasser, insbesondere für eine Niedrigtemperaturheizungsanlage, beispielsweise eine Fußbodenheizung. Voraussetzung dafür ist die exakte Trennung des Abwassers in Schwarzwasser und Grauwasser durch ein Zweirohrabwassersystem. Unter Grauwasser wird Abwasser ohne Fäkalien verstanden, Schwarzwasser kann hingegen Fäkalien enthalten. Die Temperatur des anfallenden Grauwassers G wird durch mindestens einen Temperatursensor gemessen und mit den bestehenden Temperaturen des Grauwassers G in den verschiedene Wärmetauscherzellen 3.1 bis 3.4 des Wärmetauschers 2 verglichen. Wenn die Temperatur des anfallenden Grauwassers G niedriger ist als jede der aktuell bestehenden Temperaturen des Grauwassers G in den verschiedene Wärmetauscherzellen 3.1 bis 3.4, so wird das Grauwasser durch den Bypass 8 in ein Abwassersystem 10 geleitet.

Ist die Temperatur des anfallenden Grauwassers G allerdings größer oder gleich der niedrigsten Temperatur in einer der Wärmetauscherzellen 3.1 bis 3.4 so durchläuft das Grauwasser G den Grobfilter 5 und wird danach durch die Klappen 15.2, 15.3, 15.4, 15.5 in eine der Wärmetauscherzellen 3.1 bis 3.4 geleitet. Dabei entscheidet die anfangs gemessene Temperatur des einzuspeisenden Grauwassers G darüber, in welche der Wärmetauscherzellen 3.1 bis 3.4 es geleitet wird. Falls die betreffende Wärmetauscherzelle 3.1 bis 3.4 bereits mit Grauwasser G gefüllt ist kann, um den erforderlichen Platz zu schaffen, deren weitere Klappe im Zellverbinder 13 zunächst geöffnet werden, um das vorhandene Grauwasser G in die darunterliegende Wärmetauscherzelle 3.1 bis 3.4 oder in das Abwassersystem 10 zu leiten.

Die Rohrspiralen 4 sind vom Inhalt der Wärmetauscherzellen 3.1 bis 3.4 getrennt. Jede der Wärmetauscherzellen 3.1 bis 3.4 weist eine Zufuhröffnung, beispielsweise eine seitliche Zufuhröffnung, auf, durch die das Grauwasser G eingespeist wird. Durch die Zellverbinder 13 mit den weiteren steuerbaren Klappen zwischen den Wärmetauscherzellen 3.1 bis 3.4, beispielsweise im Zentrum der Wärmetauscherzellen 3.1 bis 3.4, kann das Grauwasser G elektronisch gesteuert von einer der Wärmetauscherzellen 3.1 bis 3.4 in eine darunterliegende Wärmetauscherzelle 3.1 bis 3.4 oder in das Abwassersystem 10 geleitet werden.

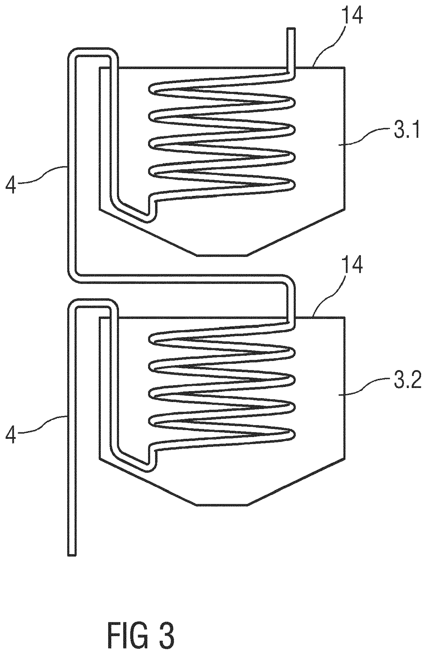

Die Rohrspiralen 4, 4.1, 4.2 welche die Wärmetauscherzellen 3.1 bis 3.4 durchlaufen, können an einer Oberseite der jeweiligen Wärmetauscherzelle 3.1 bis 3.4 beginnen and/oder enden und mit einem jeweiligen abnehmbaren Deckel 14 verbunden sein. Figur 3 zeigt eine schematische Detailansicht einer Ausführungsform der Vorrichtung, bei der die Rohrspirale 4 an der Oberseite der jeweiligen Wärmetauscherzelle 3.1, 3.2 beginnt und endet, beispielsweise im Deckel 14. Auch die in Figur 3 nicht dargestellten Wärmetauscherzellen 3.3, 3.4 können auf diese Weise ausgebildet sein. Somit ist das Reinigen von möglichen Ablagerungen problemlos möglich. Die Enden der Rohrspirale 4 sowie die Zellenverbinder 13 können an jeder Wärmetauscherzelle 3.1, 3.2, 3.3, 3.4 Rohrenden mit Gewinden aufweisen, wodurch die Wärmetauscherzellen 3.1 bis 3.4 modular miteinander verbunden werden können. Die Anzahl zu verbindender Wärmetauscherzellen 3.1 bis 3.4 ist an das anfallende Grauwasser G anpassbar. Jede der Wärmetauscherzellen 3.1 bis 3.4 kann einen Temperatursensor aufweisen, mit dem die Temperatur des in der jeweiligen Wärmetauscherzelle 3.1 bis 3.4 gespeicherten Grauwassers G gemessen werden kann. Das neu anfallende Grauwasser G wird durch die Klappen 15.2, 15.3, 15.4, 15.5, die von einem Steuerteil gesteuert und/oder geregelt sein können, geleitet. Das Steuerteil vergleicht die Temperaturen des anfallenden Grauwassers G mit den Temperaturen des Grauwassers G in den Wärmetauscherzellen 3.1 bis 3.4. Das Grauwasser G wird in diejenige Wärmetauscherzelle 3.1 bis 3.4 eingespeist, die am wenigsten kälter ist als das anfallende Grauwasser G. Sollte diese Wärmetauscherzelle 3.1 bis 3.4 zu voll sein so wird die weitere Klappe im Zellverbinder 13 dieser Wärmetauscherzelle 3.1 bis 3.4 zur darunter liegenden Wärmetauscherzelle 3.1 bis 3.4 geöffnet bis das gesamte anfallende Grauwasser G eingespeist wurde. Diese Steuerung der weiteren Klappe kann ebenfalls das Steuerteil übernehmen. Die weitere Klappe der untersten Wärmetauscherzelle 3.4 leitet das Grauwasser G ins Abwassersystem 10. Das heißeste Grauwasser G wird in der obersten Wärmetauscherzelle 3.1 und mit abfallender Temperatur in den darunterliegenden Wärmetauscherzellen 3.2 bis 3.4 gespeichert. Das Trinkwasser und/oder das Heizwasser kann die Rohrspirale 4 in den Wärmetauscherzellen 3.1 bis 3.4 Tanks von der untersten Wärmetauscherzelle 3.4 bis in die oberste Wärmetauscherzelle 3.1 durchlaufen. Dabei kann der anliegende Druck des Trinkwassers genutzt werden. An der Trinkwasserleitung und/oder der Heizwasserleitung befindet sich nach Durchlaufen des Grauwassertanks ein elektronisch steuerbares Ventil womit die Durchflussgeschwindigkeit reguliert werden kann um die maximale Wärmeaufnahme zu ermöglichen oder beim Heizkreislauf eine gewünschte Vorlauftemperatur einstellen zu können. Des Weiteren kann sich vor diesem Ventil ein Druckmesser befinden. Falls der Druck in der Trinkwasserleitung und/oder in der Heizwasserleitung abfällt obwohl das Ventil geschlossen ist, so kann auf ein Leck in der betreffenden Rohrspirale 4 geschlossen werden. Auf diese Weise wird eine Schutzfunktion realisiert um den Eintritt von Grauwasser in die Trinkwasserleitung und/oder in den Heizkreislauf sofort zu bemerken. Das vorgewärmte Trinkwasser kann in einem bestehenden Puffertank eingespeist und in diesem durch ein oder mehrere technische Anlagen auf die gewünschte Endtemperatur erhitzt werden.

Die zusammengeschlossenen Wärmetauscherzellen 3.1, 3.2, 3.3, 3.4 können durch Dämmstoffe isoliert sein.

Ein Installationsort der Vorrichtung 1 wird in einem Gebäude oder außerhalb vorzugsweise so gewählt, dass das Grauwasser G ungehindert durch Gefälle die Vorrichtung 1 durchfließen kann so dass auf Pumpen verzichtet werden kann.

Außerhalb eines Gebäudes kann der Wärmetauscher 2 wärmeisoliert in einem Erdtank angeordnet werden. Auf diese Weise ist die Vorrichtung 1 auch für Gebäude ohne Keller oder mit geringem Platzangebot geeignet.

Der Wärmetauscher 2 und/oder die Rohrspiralen 4 können aus Kunststoff gefertigt sein. Auf diese Weise ist die Vorrichtung 1 besser für aggressive Flüssigkeiten im Grauwasser G geeignet. Der Wärmetauscher 2 und/oder die Rohrleitung 4 können auch Metall, beispielsweise Edelstahl umfassen. Insbesondere die Rohrleitung 4 kann beispielsweise aus Metall, insbesondere Edelstahl, gebildet sein und auf einer Außenseite und/oder einer Innenseite mit Kunststoff beschichtet sein.

Die Vorrichtung 1 kann ohne wesentliche Veränderungen für die Nutzung der Abwärme von Kühlanlagen angewendet werden. Dabei wird die Abwärme der Kühlanlage mittels einer Kühlflüssigkeit, beispielsweise Wasser, aufgenommen und in den Wärmetauscher 2 anstatt des Grauwassers G eingespeist. Die Temperaturen können in diesem Fall im Durchschnitt über 40 °C betragen und können somit ebenfalls für die Trinkwassererwärmung sowie Heizungsanlagen, insbesondere Niedrigtemperaturheizungsanlagen genutzt werden. Das Wasser welches die Abwärme aufnimmt und abgibt wird hierbei in einem Kreislauf gehalten und ist nicht verschmutzt, so dass Wartungsaufwand infolge Verschmutzung sowie der Anschluss an das Abwassernetz entfallen kann.

Die Vorrichtung 1 ermöglicht die Nutzung eines großen Anteils der Energie im Grauwasser oder Kühlwasser. Eine erhebliche Senkung der Energiekosten ist damit möglich.

Die Vorrichtung 1 kann mit verschiedenen Heizungsanlagen kombiniert werden, möglich. In Kombination mit einer Wärmepumpenanlage mit Erdbohrung sind beispielsweise Kosteneinsparungen von etwa 85% möglich.

Die Vorrichtung 1 verursacht nur geringe Betriebskosten da durch den Verzicht auf Pumpen kaum Strom für den Betrieb gebraucht wird.

Die Vorrichtung 1 ist ein regeneratives System und zählt somit zu erneuerbaren Systemen und erfüllt moderne Anforderungen der Energieeinsparverordnung. Hierdurch sind Kosteneinsparungen bei der Hülle von Gebäuden möglich. Beispielsweise ist gegebenenfalls weniger Dämmung und keine Dreifachverglasung erforderlich da durch die Vorrichtung 1 so viel Energie gespart wird, dass diese Maßnahmen nicht mehr zwingend notwendig sind.

Durch die Energierückgewinnung kann sich die Vorrichtung in überschaubarer Zeit rentieren.

Das beschriebene Verfahren stellt eine neue Art der Kühlung, das heißt des Abtransportes von Abwärme von Kühlanlagen und gleichzeitige Nutzung der darin gespeicherten Energie dar.

In einer Ausführungsform kann statt des Grauwassers G eine andere erwärmte Flüssigkeit, beispielsweise Kühlflüssigkeit einer Kühlanlage, eines Kraftwerks oder einer Industrieanlage, verwendet werden.

In einer Ausführungsform kann eine Rohrspirale 4 für Trinkwasser durch alle Wärmetauscherzellen 3.1, 3.2, 3.3, 3.4 von unten nach oben geführt sein. In der untersten Wärmetauscherzelle 3.4 kann eine Rohrspirale 4 zur Wärmegewinnung für eine Wärmepumpe vorgesehen sein. In den darüber liegenden Wärmetauscherzellen 3.1, 3.2, 3.3 kann eine Rohrspirale 4 zur Gewinnung von Wärme für eine Heizungsanlage, insbesondere eine Niedertemperaturheizungsanlage, beispielsweise eine Fußbodenheizung oder für eine Rücklauftemperaturanhebung, vorgesehen sein. Erfindungsgemäß ist für die Niedertemperaturheizungsanlage eine weitere Rohrleitung 4.1 vorgesehen, die als Rücklauf die Wärmetauscherzellen 3.1, 3.2, 3.3, 3.4 von unten nach oben durchläuft. Zwischen den Wärmetauscherzellen 3.1, 3.2, 3.3, 3.4 und oberhalb der obersten Wärmetauscherzelle 3.1 ist die Rohrleitung 4.1 über Verbindungsrohre 12 jeweils zu einer Vorlaufleitung 11 verbunden. In den Verbindungsrohren 12 können elektronisch gesteuerte Klappen vorgesehen sein, mittels deren in der Vorlaufleitung 11 eine vorgegebene Vorlauftemperatur eingestellt werden kann. Auch die Klappen in den Verbindungsrohren 12 können durch das Steuerteil gesteuert und/oder geregelt werden.

In einer beispielhaften Ausführungsform kann die vorgegebene Temperatur für die oberste Wärmetauscherzelle 3.1 40 °C, für die darunterliegende Wärmetauscherzelle 3.2 35 °C, für die darunterliegende Wärmetauscherzelle 3.3 30 °C und für die unterste Wärmetauscherzelle 3.4 20 °C sein.

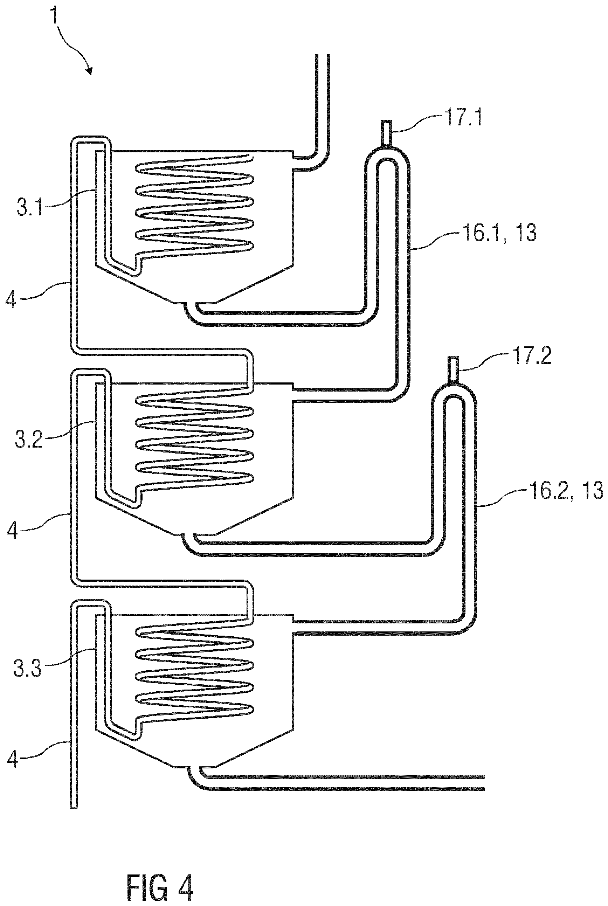

Figur 4 zeigt eine beispielhafte Ausführungsform der Vorrichtung 1 mit Wärmetauscherzellen 3.1, 3.2, 3.3, wobei die Zellenverbinder 13 einander benachbarter Wärmetauscherzellen 3.1, 3.2, 3.3 einen jeweiligen Syphon 16.1, 16.2 umfassen, der das Grauwasser G an einem Auslauf, insbesondere an einem Grund der jeweils oberen der miteinander verbundenen Wärmetauscherzellen 3.1, 3.2, 3.3, aufnimmt, dann jeweils bis zur Höhe einer Oberkante der jeweils oberen der miteinander verbundenen Wärmetauscherzellen 3.1, 3.2, 3.3 und schließlich in die jeweils untere der miteinander verbundenen Wärmetauscherzellen 3.1, 3.2, 3.3 geführt ist. An einem Hochpunkt des Syphons 16.1, 16.2 kann jeweils ein Belüftungsventil 17.1, 17.2 vorgesehen sein.

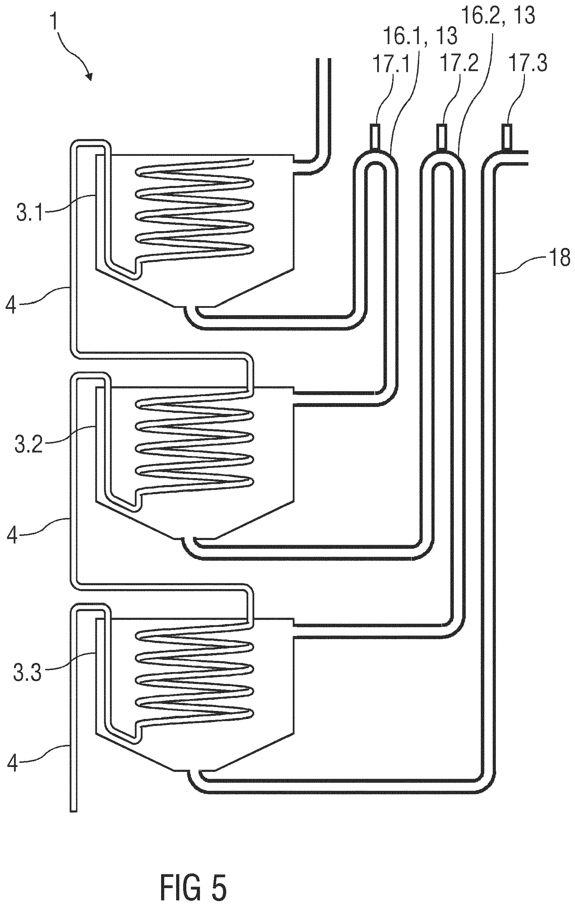

Figur 5 zeigt eine beispielhafte Ausführungsform der Vorrichtung 1 mit Wärmetauscherzellen 3.1, 3.2, 3.3, wobei die Zellenverbinder 13 einander benachbarter Wärmetauscherzellen 3.1, 3.2, 3.3 einen jeweiligen Syphon 16.1, 16.2 umfassen, der das Grauwasser G an einem Auslauf, insbesondere an einem Grund der jeweils oberen der miteinander verbundenen Wärmetauscherzellen 3.1, 3.2, 3.3, aufnimmt, dann jeweils bis zur Höhe einer Oberkante der obersten der Wärmetauscherzellen 3.1, 3.2, 3.3 und schließlich in die jeweils untere der miteinander verbundenen Wärmetauscherzellen 3.1, 3.2, 3.3 geführt ist. An einem Hochpunkt des Syphons 16.1, 16.2 kann jeweils ein Belüftungsventil 17.1, 17.2 vorgesehen sein. Ferner ist ein Ablauf 18 der untersten Wärmetauscherzelle 3.3 ebenfalls bis auf die Höhe der Oberkante der obersten der Wärmetauscherzellen 3.1, 3.2, 3.3 geführt und an diesem Hochpunkt kann ein Belüftungsventil 17.3 vorgesehen sein.

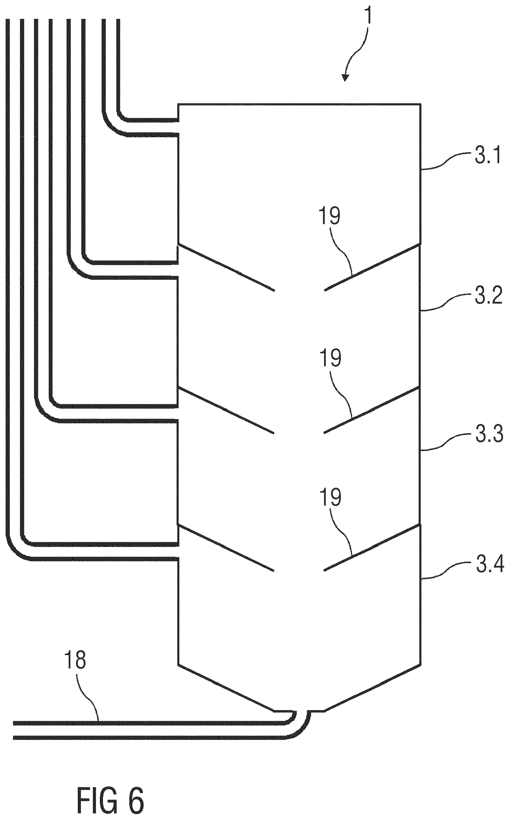

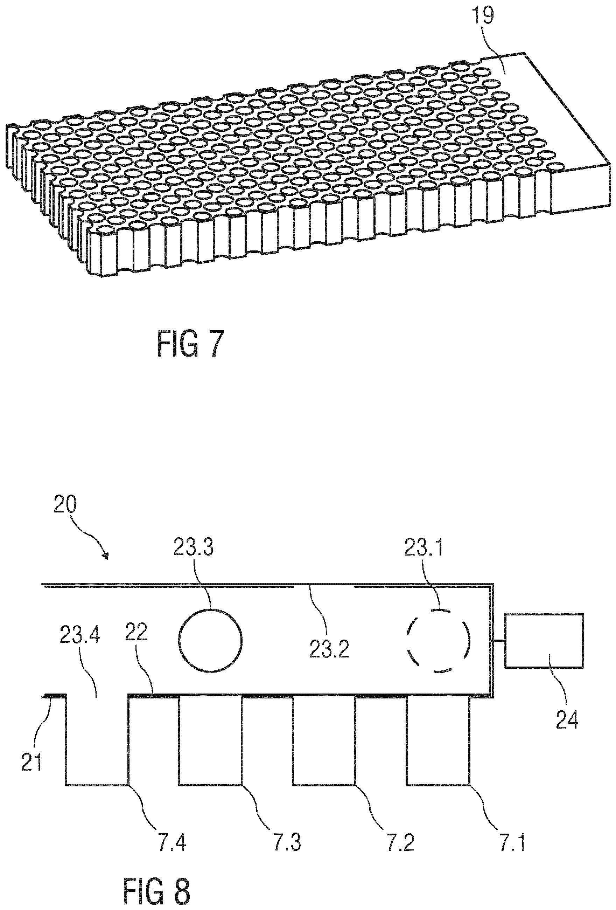

Figur 6 zeigt eine beispielhafte Ausführungsform der Vorrichtung 1 mit Wärmetauscherzellen 3.1, 3.2, 3.3, 3.4, die übereinander angeordnet sind, wobei zwischen einander benachbarten Wärmetauscherzellen 3.1, 3.2, 3.3, 3.4 jeweils eine den Fluss des Grauwassers G hemmende Struktur 19 vorgesehen ist. Die Rohrleitung 4 ist nicht dargestellt. Die hemmende Struktur 19 kann beispielsweise als eine gelochte Kunststoffplatte ausgebildet sein, wie beispielhaft in Figur 7 dargestellt ist. Die Wärmetauscherzellen 3.1, 3.2, 3.3, 3.4 können als getrennte Behälter oder als Abschnitte eines gemeinsamen Behälters ausgebildet sein.

Es können mehr oder weniger verbundene Wärmetauscherzellen 3.1 bis 3.4 als in den Figuren 4 bis 6 dargestellt vorgesehen sein.

In den Ausführungsformen der Figuren 4, 5 und 6 kann auf Zellverbinder 13 mit weiteren steuerbaren Klappen verzichtet werden.

Figur 8 zeigt eine alternative Verteilervorrichtung 20 für das Grauwasser G, umfassend ein an einem Ende geschlossenes äußeres Rohr 21, an dem die Abzweige 7.1, 7.2, 7.3, 7.4 vorgesehen sind, beispielsweise in Längsrichtung des äußeren Rohres 21 versetzt. In dem äußeren Rohr 21 ist ein inneres Rohr 22 rotierbar angeordnet, wobei ein Außendurchmesser des inneren Rohres 22 annähernd einem Innendurchmesser des äußeren Rohres 21 entspricht, wobei das innere Rohr 22 zu jedem Abzweig 7.1, 7.2, 7.3, 7.4 auf gleicher Höhe in Längsrichtung eine jeweilige Öffnung 23.1, 23.2, 23.3, 23.4 aufweist, die durch Rotieren des inneren Rohres 22 in eine Winkelposition stellbar ist, in der sie mit dem jeweiligen Abzweig 7.1, 7.2, 7.3, 7.4 fluchtet, so dass das Grauwasser G aus dem inneren Rohr 22 durch die Öffnung 23.1, 23.2, 23.3, 23.4 in den jeweiligen Abzweig 7.1, 7.2, 7.3, 7.4 fließen kann. Insbesondere sind die Öffnungen 23.1, 23.2, 23.3, 23.4 in Umfangsrichtung so in dem inneren Rohr 22 verteilt, dass in jeder Drehposition des inneren Rohres 22 jeweils höchstens eine der Öffnungen 23.1, 23.2, 23.3, 23.4 mit dem zugeordneten Abzweig 7.1, 7.2, 7.3, 7.4 fluchtet. Zum Drehen des inneren Rohres 22 kann ein elektrischer Stellmotor 24 vorgesehen sein, der anhand der Temperatur des Grauwassers G im Grauwassersammler 9 und in den einzelnen Wärmetauscherzellen 3.1, 3.2, 3.3, 3.4 angesteuert wird, um den jeweiligen Abzweig 7.1, 7.2, 7.3, 7.4 zu öffnen.

In weiteren Ausführungsformen kann das Grauwasser G in der Rohrleitung 4, insbesondere in einer Rohrspirale 4.1, geführt sein. Hierdurch ist eine inverse Nutzung möglich, wobei die Rohrleitung 4 mit den Abzweigen 7.1, 7.2, 7.3, 7.4 verbunden ist und das zu erwärmende Medium im Behälter der Wärmetauscherzelle 3.1, 3.2, 3.3, 3.4 vorliegt. Die Rohrleitung 4 kann so gestaltet sein, dass sie einen beliebig großen Anteil des Volumens der jeweiligen Wärmetauscherzelle 3.1, 3.2, 3.3, 3.4 einnimmt, beispielsweise bis zum halben Volumen der Wärmetauscherzelle 3.1, 3.2, 3.3, 3.4 oder darüber hinaus.

### BEZUGSZEICHENLISTE

- 1: Vorrichtung
- 2: Wärmetauscher
- 3.1, 3.2, 3.3, 3.4: Wärmetauscherzelle
- 4, 4.1, 4.2: Rohrleitung, Rohrspirale
- 5: Grobfilter
- 6: Grauwasserzuleitung
- 7.1: erster Abzweig
- 7.2: zweiter Abzweig
- 7.3: dritter Abzweig
- 7.4: vierter Abzweig
- 8: Bypass
- 9: Grauwassersammler
- 10: Abwassersystem
- 11: Vorlaufleitung
- 12: Verbindungsrohr
- 13: Zellenverbinder
- 14: Deckel
- 15.1 bis 15.5: Klappe
- 16.1 bis 16.3: Syphon
- 17.1 bis 17.3: Belüftungsventil
- 18: Ablauf
- 19: hemmende Struktur
- 20: Verteilervorrichtung
- 21: äußeres Rohr
- 22: inneres Rohr
- 23.1 bis 23.4: Öffnung
- 24: Stellmotor
- G: Grauwasser, flüssiges Medium

## Patentansprüche

1. Vorrichtung (1) zur Wärmerückgewinnung aus einem flüssigen Medium (G), umfassend:
- einen Wärmetauscher (2) mit mindestens zwei voneinander zumindest teilweise thermisch getrennten Wärmetauscherzellen (3.1, 3.2, 3.3, 3.4) zur Aufnahme des flüssigen Mediums (G), wobei jede der Wärmetauscherzellen (3.1, 3.2, 3.3, 3.4) einen Temperatursensor zur Ermittlung einer Temperatur des darin befindlichen flüssigen Mediums (G) aufweist,
- mindestens eine Rohrleitung (4, 4.1) zum Führen von Trinkwasser und/oder Heizungswasser, die zumindest eine der Wärmetauscherzellen (3.1, 3.2, 3.3, 3.4) durchläuft,
- eine Zuleitung (6), in der das flüssige Medium (G) geführt ist,
- eine Verteilervorrichtung (20), mittels derer das flüssige Medium (G) den Wärmetauscherzellen (3.1, 3.2, 3.3, 3.4) aus der Zuleitung (6) selektiv zuführbar ist,
- mindestens einen Temperatursensor zum Messen einer Temperatur des flüssigen Mediums (G) in der Zuleitung (6),
wobei die Verteilervorrichtung (20) so steuerbar und/oder regelbar ist, dass das flüssige Medium (G) aus der Zuleitung (6) derjenigen Wärmetauscherzelle (3.1, 3.2, 3.3, 3.4) zugeleitet wird, deren aktuelle Temperatur am wenigsten kälter ist als die des flüssigen Mediums (G) in der Zuleitung (6),
**dadurch gekennzeichnet, dass** eine weitere Rohrleitung (4.1) als Rücklauf einer Heizungsanlage vorgesehen ist, die die Wärmetauscherzellen (3.1, 3.2, 3.3, 3.4) von unten nach oben durchläuft, wobei zwischen den Wärmetauscherzellen (3.1, 3.2, 3.3, 3.4) und oberhalb der obersten Wärmetauscherzelle (3.1) die Rohrleitung (4.1) über Verbindungsrohre (12) jeweils zu einer Vorlaufleitung (11) verbunden ist, wobei in den Verbindungsrohren (12) steuerbare Klappen vorgesehen sind, mittels deren in der Vorlaufleitung (11) eine vorgegebene Vorlauftemperatur einstellbar ist.

2. Vorrichtung (1) nach Anspruch 1, wobei jede der Wärmetauscherzellen (3.1, 3.2, 3.3, 3.4) zu einer oder jeder benachbarten der Wärmetauscherzellen (3.1, 3.2, 3.3, 3.4) über Zellenverbinder (13) und/oder über eine den Fluss des flüssigen Mediums (G) hemmende Struktur (19) verbunden ist, um das flüssige Medium (G) einer der benachbarten Wärmetauscherzellen (3.1, 3.2, 3.3, 3.4) zuzuleiten.

3. Vorrichtung (1) nach einem der Ansprüche 1 oder 2, wobei die Wärmetauscherzellen (3.1, 3.2, 3.3, 3.4) übereinander angeordnet sind.

4. Vorrichtung (1) nach einem der vorhergehenden Ansprüche, wobei die Rohrleitung (4, 4.1) zumindest innerhalb der durchlaufenen Wärmetauscherzellen (3.1, 3.2, 3.3, 3.4) als eine Rohrspirale (4) ausgebildet ist.

5. Vorrichtung (1) nach einem der vorhergehenden Ansprüche, wobei die Rohrleitung (4, 4.1) stromabwärts vom Wärmetauscher (2) ein elektronisch steuerbares und/oder regelbares Verschlussventil aufweist, mittels dessen eine Fließgeschwindigkeit regelbar ist, wobei vorzugsweise stromaufwärts von dem Verschlussventil in der Rohrleitung (4, 4.1) ein Druckmesser vorgesehen ist mittels dessen ein Druckabfall detektierbar ist.

6. Vorrichtung (1) nach einem der vorhergehenden Ansprüche, wobei ein Bypass (8) für das flüssige Medium (G) vorgesehen ist, wobei das flüssige Medium (G) durch den Bypass (8) am Wärmetauscher (2) vorbei in ein Abwassersystem (10) leitbar ist, wenn die Temperatur des flüssigen Mediums (G) in der Zuleitung (6) niedriger ist als jede der aktuell bestehenden Temperaturen des flüssigen Mediums (G) in den Wärmetauscherzellen (3.1, 3.2, 3.3, 3.4).

7. Vorrichtung (1) nach einem der vorhergehenden Ansprüche, wobei die Rohrleitungen (4, 4.1) aus Abschnitten gebildet sind, die nach Durchlaufen einer der Wärmetauscherzellen (3.1, 3.2, 3.3, 3.4) an deren Oberseite beginnen und/oder enden und mit einem abnehmbaren Deckel (14) der jeweiligen Wärmetauscherzelle (3.1, 3.2, 3.3, 3.4) verbunden sind.

8. Vorrichtung (1) nach einem der vorhergehenden Ansprüche, wobei der Wärmetauscher (2) und/oder die Rohrspiralen (4) aus Kunststoff gebildet sind oder Kunststoffoberflächen für den Kontakt mit dem flüssigen Medium (G) aufweisen.

9. Vorrichtung (1) nach einem der vorhergehenden Ansprüche, wobei die Verteilervorrichtung (20) eine Anzahl von steuerbaren Klappen (15.1, 15.2, 15.3, 15.4, 15.5) umfasst oder wobei die Verteilervorrichtung (20) Folgendes umfasst:
- ein äußeres Rohr (21), an dem Abzweige (7.1, 7.2, 7.3, 7.4) zu den einzelnen Wärmetauscherzellen (3.1, 3.2, 3.3, 3.4) vorgesehen sind,
- ein in dem äußeren Rohr (21) mittels eines Antriebs rotierbar angeordnetes inneres Rohr (22), wobei ein Außendurchmesser des inneren Rohres (22) zumindest annähernd einem Innendurchmesser des äußeren Rohres (21) entspricht, wobei das innere Rohr (22) zu jedem Abzweig (7.1, 7.2, 7.3, 7.4) auf gleicher Höhe in Längsrichtung eine jeweilige Öffnung (23.1, 23.2, 23.3, 23.4) aufweist, die durch Rotieren des inneren Rohres (22) in eine Winkelposition stellbar ist, in der sie mit dem jeweiligen Abzweig (7.1, 7.2, 7.3, 7.4) fluchtet, derart, dass in jeder Drehposition des inneren Rohres (22) jeweils höchstens eine der Öffnungen (23.1, 23.2, 23.3, 23.4) mit dem zugeordneten Abzweig (7.1, 7.2, 7.3, 7.4) fluchtet.

10. Vorrichtung (1) nach einem der vorhergehenden Ansprüche in Abhängigkeit von Anspruch 2, wobei der Zellenverbinder (13) jeweils eine weitere steuerbare Klappe und/oder einen Syphon (16.1, 16.2, 16.3) umfasst, der das flüssige Medium (G) an einem Auslauf, insbesondere an einem Grund der jeweils oberen der miteinander verbundenen Wärmetauscherzellen (3.1, 3.2, 3.3) aufnimmt, dann mindestens bis zur Höhe einer Oberkante der jeweils oberen der miteinander verbundenen Wärmetauscherzellen (3.1, 3.2, 3.3) und schließlich in die jeweils untere der miteinander verbundenen Wärmetauscherzellen (3.1, 3.2, 3.3) führt, wobei vorzugsweise an einem Hochpunkt des Syphons (16.1, 16.2, 16.3) ein Belüftungsventil (17.1, 17.2, 17.3) vorgesehen ist.

11. Vorrichtung (1) nach Anspruch 10, wobei der Syphon (16.1, 16.2, 16.3) bis zur Höhe einer Oberkante der obersten der Wärmetauscherzellen (3.1, 3.2, 3.3) geführt ist.

12. Verfahren zum Betrieb einer Vorrichtung (1) nach einem der vorhergehenden Ansprüche, wobei die Klappen (15.1, 15.2, 15.3, 15.4, 15.5) so gesteuert und/oder geregelt werden, dass das flüssige Medium (G), insbesondere Grauwasser (G), aus der Zuleitung (6) derjenigen Wärmetauscherzelle (3.1, 3.2, 3.3, 3.4) zugeleitet wird, deren aktuelle Temperatur am wenigsten kälter ist als die des Grauwassers (G) in der Zuleitung (6), wobei vorzugsweise das Trinkwasser und/oder Heizungswasser durch die Rohrleitung (4) von unten nach oben durch den Wärmetauscher (2) geleitet wird,
**dadurch gekennzeichnet, dass** eine weitere Rohrleitung (4.1) als Rücklauf einer Heizungsanlage vorgesehen ist, die die Wärmetauscherzellen (3.1, 3.2, 3.3, 3.4) von unten nach oben durchläuft, wobei zwischen den Wärmetauscherzellen (3.1, 3.2, 3.3, 3.4) und oberhalb der obersten Wärmetauscherzelle (3.1) die Rohrleitung (4.1) über Verbindungsrohre (12) jeweils zu einer Vorlaufleitung (11) verbunden ist, wobei in den Verbindungsrohren (12) steuerbare Klappen vorgesehen sind, mittels deren in der Vorlaufleitung (11) eine vorgegebene Vorlauftemperatur eingestellt wird.

13. Verfahren nach Anspruch 12, wobei die Wärmetauscherzellen (3.1, 3.2, 3.3, 3.4) übereinander angeordnet sind, wobei das kälteste flüssige Medium (G) in der untersten Wärmetauscherzelle (3.4) und das heißeste flüssige Medium (G) in der obersten Wärmetauscherzelle (3.1) gespeichert wird.

14. Verfahren nach Anspruch 13, wobei jede der Wärmetauscherzellen (3.1, 3.2, 3.3, 3.4) zu einer oder jeder benachbarten der Wärmetauscherzellen (3.1, 3.2, 3.3, 3.4) über Zellenverbinder (13) mit jeweils einer weiteren steuerbaren Klappe verbunden ist, um das flüssige Medium (G) einer der benachbarten Wärmetauscherzellen (3.1, 3.2, 3.3, 3.4) zuzuleiten, wobei, falls eine zu befüllende Wärmetauscherzelle (3.1, 3.2, 3.3, 3.4) bereits mit flüssigem Medium (G) gefüllt ist, um den erforderlichen Platz zu schaffen, deren weitere Klappe im Zellverbinder (13) zunächst geöffnet wird, um das vorhandene flüssige Medium (G) in die darunterliegende Wärmetauscherzelle (3.1, 3.2, 3.2, 3.4) oder in ein Abwassersystem (10) zu leiten.

## Claims

1. Device (1) for recovering heat from a liquid medium (G), comprising:
- a heat exchanger (2) having at least two heat-exchanger cells (3.1, 3.2, 3.3, 3.4) which are at least partially thermally separated from one another and which serve for receiving the liquid medium (G), wherein each of the heat-exchanger cells (3.1, 3.2, 3.3, 3.4) has a temperature sensor for ascertaining a temperature of the liquid medium (G) which is situated therein,
- at least one pipeline (4, 4.1) for conducting drinking water and/or heating water, which at least one pipeline passes through at least one of the heat-exchanger cells (3.1, 3.2, 3.3, 3.4),
- a feed line (6) in which the liquid medium (G) is conducted,
- a distributor device (20) by means of which the liquid medium (G) is selectively suppliable to the heat-exchanger cells (3.1, 3.2, 3.3, 3.4) from the feed line (6),
- at least one temperature sensor for measuring a temperature of the liquid medium (G) in the feed line (6),
wherein the distributor device (20) is open loop and/or closed loop controllable in such a way that the liquid medium (G) is fed from the feed line (6) to that heat-exchanger cell (3.1, 3.2, 3.3, 3.4) whose present temperature is the least colder than that of the liquid medium (G) in the feed line (6), **characterized in that** a further pipeline (4.1) is provided as a return line of a heating installation, which passes through the heat-exchanger cells (3.1, 3.2, 3.3, 3.4) from bottom to top, wherein, between the heat-exchanger cells (3.1, 3.2, 3.3, 3.4) and above the uppermost heat-exchanger cell (3.1), the pipeline (4.1) is connected via connecting pipes (12) in each case to a supply line (11), wherein, in the connecting pipes (12), controllable flaps are provided by means of which a predefined supply temperature is settable in the supply line (11).

2. Device (1) according to Claim 1, wherein each of the heat-exchanger cells (3.1, 3.2, 3.3, 3.4) is connected to an or each adjacent one of the heat-exchanger cells (3.1, 3.2, 3.3, 3.4) via cell connectors (13), and/or via a structure (19) which inhibits the flow of the liquid medium (G), in order for the liquid medium (G) to be fed to one of the adjacent heat-exchanger cells (3.1, 3.2, 3.3, 3.4).

3. Device (1) according to either of Claims 1 and 2, wherein the heat-exchanger cells (3.1, 3.2, 3.3, 3.4) are arranged one above the other.

4. Device (1) according to one of the preceding claims, wherein the pipeline (4, 4.1), at least within the heat-exchanger cells (3.1, 3.2, 3.3, 3.4) passed through, is in the form of a spiral pipe (4).

5. Device (1) according to one of the preceding claims, wherein, downstream of the heat exchanger (2), the pipeline (4, 4.1) has an electronically open loop and/or closed loop controllable closure valve by means of which a flow speed is controllable, wherein preferably, upstream of the closure valve, a pressure gauge is provided in the pipeline (4, 4.1) by means of which a pressure drop is detectable.

6. Device (1) according to one of the preceding claims, wherein a bypass (8) is provided for the liquid medium (G), wherein the liquid medium (G) is guidable through the bypass (8) past the heat exchanger (2) into a wastewater system (10) if the temperature of the liquid medium (G) in the feed line (6) is lower than each of the present temperatures of the liquid medium (G) in the heat-exchanger cells (3.1, 3.2, 3.3, 3.4).

7. Device (1) according to one of the preceding claims, wherein the pipelines (4, 4.1) are formed from portions which, after one of the heat-exchanger cells (3.1, 3.2, 3.3, 3.4) has been passed through, begin and/or end at the top side thereof and are connected to a removable cover (14) of the respective heat-exchanger cell (3.1, 3.2, 3.3, 3.4).

8. Device (1) according to one of the preceding claims, wherein the heat exchanger (2) and/or the spiral pipes (4) are/is formed from plastic or have/has plastic surfaces for the contact with the liquid medium (G).

9. Device (1) according to one of the preceding claims, wherein the distributor device (20) comprises a number of controllable flaps (15.1, 15.2, 15.3, 15.4, 15.5), or wherein the distributor device (20) comprises the following:
- an outer pipe (21) on which branches (7.1, 7.2, 7.3, 7.4) to the individual heat-exchanger cells (3.1, 3.2, 3.3, 3.4) are provided,
- an inner pipe (22) which is arranged in the outer pipe (21) so as to be rotatable by means of a drive, wherein an outer diameter of the inner pipe (22) corresponds at least approximately to an inner diameter of the outer pipe (21), wherein the inner pipe (22) has for each branch (7.1, 7.2, 7.3, 7.4) a respective opening (23.1, 23.2, 23.3, 23.4) at the same level in a longitudinal direction, which, by way of rotation of the inner pipe (22), is adjustable into an angular position in which it is aligned with the respective branch (7.1, 7.2, 7.3. 7.4), in such a way that, in each rotational position of the inner pipe (22), in each case at most one of the openings (23.1, 23.2, 23.3, 23.4) is aligned with the associated branch (7.1, 7.2, 7.3. 7.4).

10. Device (1) according to one of the preceding claims where dependent on Claim 2, wherein the cell connector (13) in each case comprises a further controllable flap and/or a siphon (16.1, 16.2, 16.3) which receives the liquid medium (G) at an outlet, in particular at a base, of the in each case upper one of the interconnected heat-exchanger cells (3.1, 3.2, 3.3), then conducts said liquid medium at least up to the height of a top edge of the in each case upper one of the interconnected heat-exchanger cells (3.1, 3.2, 3.3), and finally conducts said liquid medium into the in each case lower one of the interconnected heat-exchanger cells (3.1, 3.2, 3.3), wherein preferably a venting valve (17.1, 17.2, 17.3) is provided at a high point of the siphon (16.1, 16.2, 16.3).

11. Device (1) according to Claim 10, wherein the siphon (16.1, 16.2, 16.3) is led up to the height of a top edge of the uppermost one of the heat-exchanger cells (3.1, 3.2, 3.3).

12. Method for operating a device (1) according to one of the preceding claims, wherein the flaps (15.1, 15.2, 15.3, 15.4, 15.5) are open loop and/or closed loop controlled in such a way that the liquid medium (G), in particular grey water (G), is fed from the feed line (6) to that heat-exchanger cell (3.1, 3.2, 3.3, 3.4) whose present temperature is the least colder than that of the grey water (G) in the feed line (6), wherein preferably the drinking water and/or heating water are/is conducted through the heat exchanger (2) from bottom to top through the pipeline (4),
**characterized in that** a further pipeline (4.1) is provided as a return line of a heating installation, which passes through the heat-exchanger cells (3.1, 3.2, 3.3, 3.4) from bottom to top, wherein, between the heat-exchanger cells (3.1, 3.2, 3.3, 3.4) and above the uppermost heat-exchanger cell (3.1), the pipeline (4.1) is connected via connecting pipes (12) in each case to a supply line (11), wherein, in the connecting pipes (12), controllable flaps are provided by means of which a predefined supply temperature is set in the supply line (11).

13. Method according to Claim 12, wherein the heat-exchanger cells (3.1, 3.2, 3.3, 3.4) are arranged one above the other, wherein the coldest liquid medium (G) is stored in the lowermost heat-exchanger cell (3.4) and the hottest liquid medium (G) is stored in the uppermost heat-exchanger cell (3.1).

14. Method according to Claim 13, wherein each of the heat-exchanger cells (3.1, 3.2, 3.3, 3.4) is connected to an or each adjacent one of the heat-exchanger cells (3.1, 3.2, 3.3, 3.4) via cell connectors (13) having in each case one further controllable flap, in order for the liquid medium (G) to be fed to one of the adjacent heat-exchanger cells (3.1, 3.2, 3.3, 3.4), wherein, if a heat-exchanger cell (3.1, 3.2, 3.3, 3.4) to be filled is already filled with liquid medium (G), in order to create the required space, the further flap thereof in the cell connector (13) is firstly opened in order for the liquid medium (G) present to be guided into the heat-exchanger cell (3.1, 3.2, 3.3, 3.4) situated therebelow or into a wastewater system (10) .

## Revendications

1. Dispositif (1) de récupération de chaleur d'un milieu liquide (G), ledit dispositif comprenant :
- un échangeur de chaleur (2) pourvu d'au moins deux cellules d'échange de chaleur (3.1, 3.2, 3.3, 3.4) qui sont au moins partiellement séparées thermiquement l'une de l'autre et qui sont destinées à recevoir le milieu liquide (G), chacune des cellules d'échange de chaleur (3.1, 3.2, 3.3, 3.4) comportant un capteur de température destiné à déterminer une température du milieu liquide (G) situé à l'intérieur,
- au moins une canalisation (4, 4.1) destinée à conduire l'eau potable et/ou l'eau de chauffage qui traverse au moins une des cellules d'échange de chaleur (3.1, 3.2, 3.3, 3.4),
- une conduite d'alimentation (6) dans laquelle le milieu liquide (G) est guidé,
- un dispositif distributeur (20) permettant d'amener le milieu liquide (G) sélectivement de la conduite d'alimentation (6) aux cellules d'échange de chaleur (3.1, 3.2, 3.3, 3.4),
- au moins un capteur de température destiné à mesurer une température du milieu liquide (G) dans la conduite d'alimentation (6),
le dispositif distributeur (20) pouvant être commandé et/ou régulé de manière à ce que le milieu liquide (G) soit amené de la conduite d'alimentation (6) à la cellule d'échange de chaleur (3.1, 3.2, 3.3, 3.4) dont la température actuelle est le moins inférieure que celle du milieu liquide (G) situé dans la conduite d'alimentation (6),
**caractérisé en ce qu'**une autre canalisation (4.1) est prévue comme retour d'une installation de chauffage, laquelle autre canalisation traverse les cellules d'échange de chaleur (3.1, 3.2, 3.3, 3.4) de bas en haut, entre les cellules d'échange de chaleur (3.1, 3.2, 3.3, 3.4) et au-dessus de la cellule d'échange de chaleur la plus élevée (3.1), la canalisation (4.1) étant reliée par le biais de tubes de liaison (12) à chaque fois à une conduite d'arrivée (11), des volets commandables étant prévus dans les tubes de liaison (12) et permettant de régler une température d'arrivée spécifiée dans la conduite d'arrivée (11).

2. Dispositif (1) selon la revendication 1, chacune des cellules d'échange de chaleur (3.1, 3.2, 3.3, 3.4) étant reliée à une ou chacune des cellules d'échange de chaleur adjacentes (3.1, 3.2, 3.3, 3.4) par le biais de raccords de cellule (13) et/ou par le biais d'une structure (19) de blocage du flux de milieu liquide (G) afin d'amener le milieu liquide (G) à l'une des cellules d'échangeur de chaleur adjacentes (3.1, 3.2, 3.3, 3.4).

3. Dispositif (1) selon l'une des revendications 1 ou 2, les cellules d'échange de chaleur (3.1, 3.2, 3.3, 3.4) étant disposées les unes au-dessus des autres.

4. Dispositif (1) selon l'une des revendications précédentes, la canalisation (4, 4.1) étant conçue comme un tube spiralé (4) au moins à l'intérieur des cellules d'échange de chaleur (3.1, 3.2, 3.3, 3.4) qu'elle traverse.

5. Dispositif (1) selon l'une des revendications précédentes, la canalisation (4, 4.1) comportant en aval de l'échangeur de chaleur (2) une vanne d'arrêt à commande et/ou régulation électronique qui permet de réguler une vitesse d'écoulement, un manomètre étant prévu de préférence en amont de la vanne d'arrêt dans la canalisation (4, 4.1) et permettant de détecter une chute de pression.

6. Dispositif (1) selon l'une des revendications précédentes, une dérivation (8) ayant prévue pour le milieu liquide (G), le milieu liquide (G) pouvant être acheminé à travers la dérivation (8) jusque dans un système d'eaux usées (10) en passant par l'échangeur de chaleur (2) lorsque la température du milieu liquide (G) dans la conduite d'alimentation (6) est inférieure à chacune des températures du milieu liquide (G) actuellement présentes dans les cellules d'échange de chaleur (3.1, 3.2, 3.3, 3.4).

7. Dispositif (1) selon l'une des revendications précédentes, les canalisations (4, 4.1) étant formées de portions qui, après avoir traversé l'une des cellules d'échange de chaleur (3.1, 3.2, 3.3, 3.4), commencent et/ou se terminent au sommet de celle-ci et sont reliées à un couvercle amovible (14) de la cellule d'échange de chaleur respective (3.1, 3.2, 3.3, 3.4).

8. Dispositif (1) selon l'une des revendications précédentes, l'échangeur de chaleur (2) et/ou les tubes spiralés (4) étant en matière synthétique ou comportant des surfaces en matière synthétique destinées à venir en contact avec le milieu liquide (G).

9. Dispositif (1) selon l'une des revendications précédentes, le dispositif distributeur (20) comprenant plusieurs volets commandables (15.1, 15.2, 15.3, 15.4, 15.5) ou le dispositif distributeur (20) comprenant :
- un tube extérieur (21) au niveau duquel sont prévus des raccordements (7.1, 7.2, 7.3, 7.4) menant aux cellules d'échange de chaleur individuelles (3.1, 3.2, 3.3, 3.4),
- un tube intérieur (22) qui est disposé dans le tube extérieur (21) de manière rotative à l'aide d'un entraînement, un diamètre extérieur du tube intérieur (22) correspondant au moins approximativement à un diamètre intérieur du tube extérieur (21), le tube intérieur (22) comportant pour chaque raccordement (7.1, 7.2, 7.3, 7.4), au même niveau dans la direction longitudinale, une ouverture respective (23.1, 23.2, 23.3, 23.4) qui peut être réglée par rotation du tube intérieur (22) à une position angulaire à laquelle elle est aligné avec le raccordement respectif (7.1, 7.2, 7.3, 7.4) de manière à ce que, à chaque position de rotation du tube intérieur (22), pas plus d'une des ouvertures (23.1, 23.2, 23.3, 23.4) n'est à chaque fois alignée sur le raccordement associé (7.1, 7.2, 7.3, 7.4).

10. Dispositif (1) selon l'une des revendications précédentes en fonction de la revendication 2, le raccord de cellule (13) comprenant un autre volet commandable et/ou un siphon (16.1, 16.2, 16.3) qui reçoit le milieu liquide (G) au niveau d'une sortie, en particulier au niveau d'une base de la plus haute des cellules d'échange de chaleur (3.1, 3.2, 3.3) reliées entre elles, puis guide le milieu liquide (G) au moins jusqu'à la hauteur d'un bord supérieur de la plus haute des cellules d'échange de chaleur (3.1, 3.2, 3.3) reliées entre elles et enfin jusque dans la plus basse des cellules d'échange de chaleur (3.1, 3.2, 3.3) reliées entre elles, une vanne de ventilation (17.1, 17.2, 17.3) étant prévue de préférence à un point haut du siphon (16.1, 16.2, 16.3).

11. Dispositif (1) selon la revendication 10, le siphon (16.1, 16.2, 16.3) étant guidé jusqu'à la hauteur d'un bord supérieur de la plus haute des cellules d'échange de chaleur (3.1, 3.2, 3.3).

12. Procédé de fonctionnement d'un dispositif (1) selon l'une des revendications précédentes, les volets (15.1, 15.2, 15.3, 15.4, 15.5) étant commandés et/ou régulés de manière à ce que le milieu liquide (G), en particulier l'eau grise (G), soit amené de la conduite d'alimentation (6) à la cellule d'échange de chaleur (3.1, 3.2, 3.3, 3.4) dont la température actuelle est le moins inférieure à celle de l'eau grise (G) dans la conduite d'alimentation (6), l'eau potable et/ou l'eau de chauffage étant de préférence guidées par la canalisation (4) de bas en haut à travers l'échangeur de chaleur (2),
**caractérisé en ce qu'**une autre canalisation (4.1) est prévue comme retour d'une installation de chauffage, laquelle autre canalisation traverse les cellules d'échange de chaleur (3.1, 3.2, 3.3, 3.4) de bas en haut, entre les cellules d'échange de chaleur (3.1, 3.2, 3.3, 3.4) et au-dessus de la cellule d'échange de chaleur la plus élevée (3.1), la canalisation (4.1) étant reliée par le biais de tubes de liaison (12) à chaque fois à une conduite d'arrivée (11), des volets commandables étant prévus dans les tubes de liaison (12) et permettant de régler une température d'arrivée spécifiée dans la conduite d'arrivée (11).

13. Procédé selon la revendication 12, les cellules d'échange de chaleur (3.1, 3.2, 3.3, 3.4) étant disposées les unes au-dessus des autres, le milieu liquide le plus froid (G) situé dans la cellule d'échange de chaleur inférieure (3.4) et le milieu liquide le plus chaud (G) situé dans la cellule d'échange de chaleur supérieure (3.1) sont stockés.

14. Procédé selon la revendication 13, chacune des cellules d'échange de chaleur (3.1, 3.2, 3.3, 3.4) étant reliée à une ou chaque cellule d'échange de chaleur adjacente (3.1, 3.2, 3.3, 3.4) par le biais de raccordements de cellule (13) pourvus chacun d'un autre volet commandable afin d'amener le milieu liquide (G) à l'une des cellules d'échange de chaleur adjacentes (3.1, 3.2, 3.3, 3.4), si une cellule d'échange de chaleur (3.1, 3.2, 3.3, 3.4) à remplir est déjà remplie de milieu liquide (G) afin de créer l'espace requis, son autre volet située dans le raccordement de cellule (13) étant d'abord ouvert afin d'amener le milieu liquide présent (G) dans la cellule d'échange de chaleur sous-jacente (3.1, 3.2, 3.2, 3.4) ou dans un système d'eaux usées (10).
